# EUROPEAN PATENT SPECIFICATION

(11) **EP 4 343 899 B1**
(45) Date of publication and mention of the grant of the patent: **06.05.2026**
(21) Application number: 22804324.6
(22) Date of filing: 09.03.2022
(51) Int. Cl.: H01M 8/0206, H01M 8/0247, H01M 8/0258, H01M 8/0276, H01M 8/0254, H01M 8/10, B23K 26/21, H01M 8/0271, H01M 8/0286, H01M 8/0297

(54) **FUEL CELL SEPARATOR MANUFACTURING METHOD AND FUEL CELL SEPARATOR**
VERFAHREN ZUR HERSTELLUNG EINES BRENNSTOFFZELLENSEPARATORS UND BRENNSTOFFZELLENSEPARATOR
PROCÉDÉ DE FABRICATION DE SÉPARATEUR DE PILE À COMBUSTIBLE ET SÉPARATEUR DE PILE À COMBUSTIBLE

(30) Priority: 17.05.2021 JP 2021082987
(43) Date of publication of application: 27.03.2024
(73) Proprietor: NOK Corporation, Minato-ku, Tokyo 105-8585 (JP); HONDA MOTOR CO., LTD., Tokyo 105-8404 (JP)
(72) Inventor: SUZUKI Kento, Kikukawa-shi, Shizuoka 437-1507 (JP); KANEKO Masaki, Kikukawa-shi, Shizuoka 437-1507 (JP); OKUBO Takuro, Wako-shi, Saitama 351-0193 (JP); OYAMA Satoshi, Wako-shi, Saitama 351-0193 (JP); GIGA Akihito, Wako-shi, Saitama 351-0193 (JP)
(74) Representative: TBK
(86) International application number: PCT/JP2022/010239
(87) International publication number: WO 2022/244404

(56) References cited:
- JP-A- 2014 194 876
- JP-A- 2014 194 877
- JP-A- 2014 194 877
- JP-A- 2016 015 310
- JP-A- 2019 096 382
- JP-A- 2021 051 857
- US-A1- 2019 067 712
- US-A1- 2019 157 690
- US-A1- 2021 091 356

## Description

### TECHNICAL FIELD

The present invention relates to a manufacturing method of a fuel cell separator and the fuel cell separator.

### BACKGROUND ART

For example, there is known a fuel cell which secures a sealing property by causing a pair of joining separators (hereinafter, also referred simply to as "separators") to hold an electrolyte membrane therebetween, as described in JP 6 368 807 B2. Each separator is formed by joining a first metal separator and a second metal separator by welding, the first metal separator and the second metal separator each including a flat portion and a bead portion having a protruding shape. A sealing member made of rubber or the like is arranged at a distal end of the bead portion. The bead portions of the separators are made to face each other while holding the electrolyte membrane therebetween, and a sealing region is thereby formed. Reaction force of the bead portions and a following capability of the sealing members can improve a sealing property of the separators.

A welded portion is formed along an extending direction of the bead portions in the flat portions laid one on top of another. The welded portion can restrict movement of the bead portions spreading in a planar direction in the case where pressure acts in a thickness direction of the fuel cell. This allows the bead portions to maintain high reaction force, and a high sealing property can be maintained.

US 2019/067712 A1 and US 2019/157690 A1 disclose a manufacturing method of a fuel cell separator as specified in the preamble of claim 1, and a fuel cell separator as specified in the preamble of claim 2.

JP 2014 194877 A and US 2021/091356 A1 disclose a welding step in which a plurality of laser welding portions are formed symmetrically around a through-hole in a fuel cell separator.

### SUMMARY OF INVENTION

### Technical Problem

The reaction force of the bead portions of the separators is preferably uniform over the entire bead portions. However, since multiple through-holes, embossed portions, ribs, protruding portions, and the like are formed in the separators, stiffness varies depending on the area. Accordingly, making the reaction force of the bead portions uniform is difficult.

Moreover, since the welding needs to be performed along the bead portions over the entire periphery of the separator in a circumferential direction and peripheries of the through-holes, weld meeting points where welded portions meet are inevitably formed. In each weld meeting point, heat input in the welding is excessive compared to the other portions. Accordingly, force pulling the bead portion adjacent to the weld meeting point in the planar direction is generated, and there is a risk that the height of the bead portion is reduced and the sealing property is also reduced. Such a phenomenon may occur also when the welded portions meet on the front and back sides of the separator.

The present invention has been made to solve such problems, and an object is to provide a manufacturing method of a fuel cell separator and a fuel cell separator that can prevent a reduction of a sealing property.

### Solution to Problem

The present invention for solving the above problems includes a manufacturing method of a fuel cell separator as specified in claim 1.

Moreover, the present invention is a fuel cell separator as specified in claim 2.

According to the present invention, the weld meeting point is located in the high-stiffness part with a high stiffness. Accordingly, even if a reduction of reaction force of the bead portion due to thermal contraction occurs, surface pressure (linear pressure) required for sealing can be secured.

According to the present invention, forming the weld meeting point at the position along the curved portion of the bead portion, the rib, or the embossed portion that are the high stiffness parts can prevent a reduction of the height of the bead portion.

### Advantageous Effects of Invention

According to the manufacturing method of a fuel cell separator and the fuel cell separator of the present invention, a reduction of a sealing property can be prevented.

### BRIEF DESCRIPTION OF DRAWINGS

FIG. 1 is a cross-sectional diagram according to Example 1.
FIG. 2 is a cross-sectional diagram of a fuel cell according to Example 1.
FIG. 3 is a plan view of a separator according to Example 1.
FIG. 4 is an enlarged plan view of a Q portion in FIG. 3.
FIG. 5 is an enlarged plan view of an R portion in FIG. 3.

### DESCRIPTION OF EMBODIMENTS

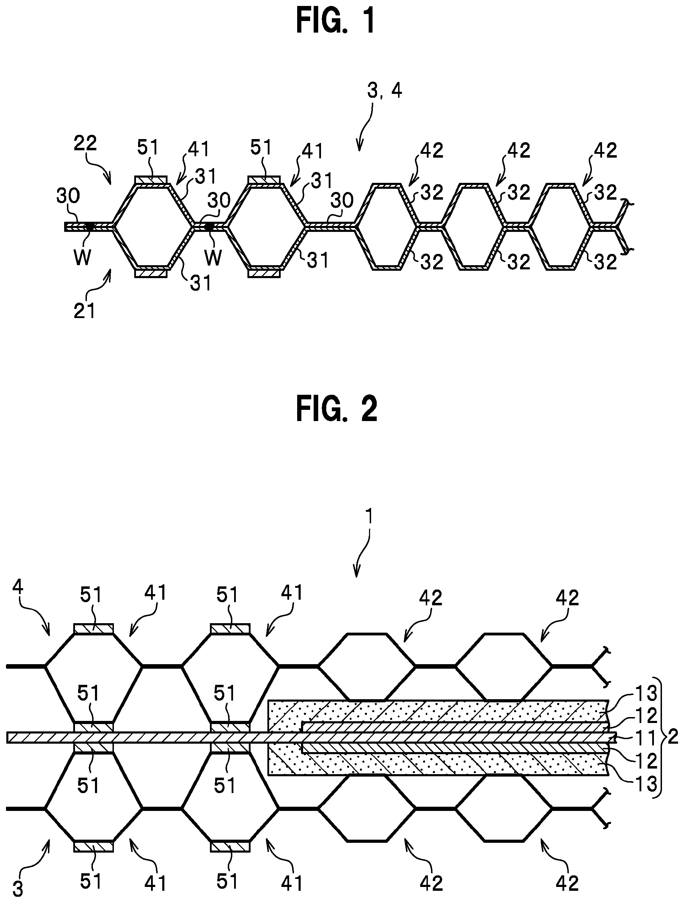

A manufacturing method of a separator and the separator according to an embodiment are described in detail with reference to the drawings. As shown in FIG. 1, a first separator 3 (second separator 4) is a plate shaped member used for a fuel cell, and includes a first metal separator 21, a second metal separator 22, and multiple sealing members 51. The first metal separator 21 and the second metal separator 22 are joined together by welding. A welded portion W formed by using welding is formed in flat portions 30, 30 laid one on top of the other.

In the manufacturing method of the separator according to the present embodiment, a weld meeting point where the welded portions W meet is formed at an area which is to be a high stiffness part with a high stiffness. The area at which the weld meeting point is formed can be away from a bead portion in the first separator 3 (second separator 4). Examples are described below in detail.

### [Example 1]

A fuel cell stack is a stack in which multiple fuel cells 1 shown in FIG. 2 are stacked one on top of another and a predetermined compression load is applied in a stacking direction of the fuel cells 1. FIG. 2 shows a fuel cell 1 to which the predetermined compression load is applied to fasten the fuel cell 1.

A membrane electrode assembly (MEA) 2 is configured to include an electrolyte membrane 11, electrode catalyst layers 12, 12, and gas diffusion layers 13, 13. The electrolyte membrane 11 protrude out of the gas diffusion layers 13. Note that a portion of the electrolyte membrane 11 protruding out of the gas diffusion layers 13 is a resin film (resin frame member) in some cases.

The first separator 3 is a plate shaped member arranged on one side (lower side in FIG. 2) of the membrane electrode assembly 2. The second separator 4 is a plate shaped member arranged on the other side (upper side in FIG. 2) of the membrane electrode assembly 2. Since the first separator 3 and the second separator 4 have the same configuration in the present example, parts of the second separator 4 are denoted by the same reference numerals as those of the first separator 3, and detailed description thereof is omitted.

Bead sealing portions 41 are formed of bead portions 31 protruding from flat portions 30 (see FIG. 1). Coupling protruding portions 42 are formed of protruding portions 32 protruding from the flat portions 30. The bead sealing portions 41 protrude toward the electrolyte membrane 11 (or the resin film), and are, for example, formed over the entire circumference of an outer peripheral edge of the fuel cell 1 in an endless state. The sealing members 51 are arranged in distal end portions of the bead sealing portions 41 to extend along extending directions of the bead sealing portions 41.

The sealing members 51 are made of an elastic material. The sealing members 51 of the present example are, for example, gaskets with a rectangular cross section. The sealing members 51 may be formed by, for example, applying a liquid-state material to the bead sealing portions 41 or by attaching a strip shaped material to the bead sealing portions 41. The sealing members 51 only need to be made of an elastic material, and, for example, ethylene propylene diene rubber (EPDM) with a rubber hardness of Hs 45 to 55, silicone rubber (VMQ), fluoro-rubber (FKM), polyisobutylene (PIB), a resin, or the like may be used.

The bead sealing portions 41, 41 and the sealing members 51, 51 facing one another can form sealing regions by holding the electrolyte membrane 11 therebetween. Since the bead sealing portions 41 are formed of the bead portions 31, 31 protruding from the flat portions 30 as shown in FIG. 1, it is possible to maintain high reaction force of the bead portions 31 and maintain a high sealing property.

Next, the manufacturing method of the separator in the present example is described. In the manufacturing method of the separator in the present example, a press forming step, an overlaying step, and a welding step are performed.

As shown in FIG. 1, the press forming step is a step of press-forming a material to form the first metal separator 21 and the second metal separator 22. The first metal separator 21 and the second metal separator 22 are each, for example, a metal thin plate with a thickness of about 0.03 to 0.5 mm and a hardness of Hv 300 or less.

The first metal separator 21 and the second metal separator 22 use materials with the same material properties in the present example. The formed first metal separator 21 and second metal separator 22 each include the flat portion 30, single or multiple bead portions 31, and single or multiple protruding portions 32. The bead portions 31 and the protruding portions 32 protrude from the flat portion 30, and include hollow portions with trapezoidal cross sections in the present example. The sealing members 51 are provided on distal end surfaces of the bead portions 31. Note that the shapes, numbers, bead heights, and arrangement of the bead portions 31 and the protruding portions 32 are merely examples, and may be set as appropriate.

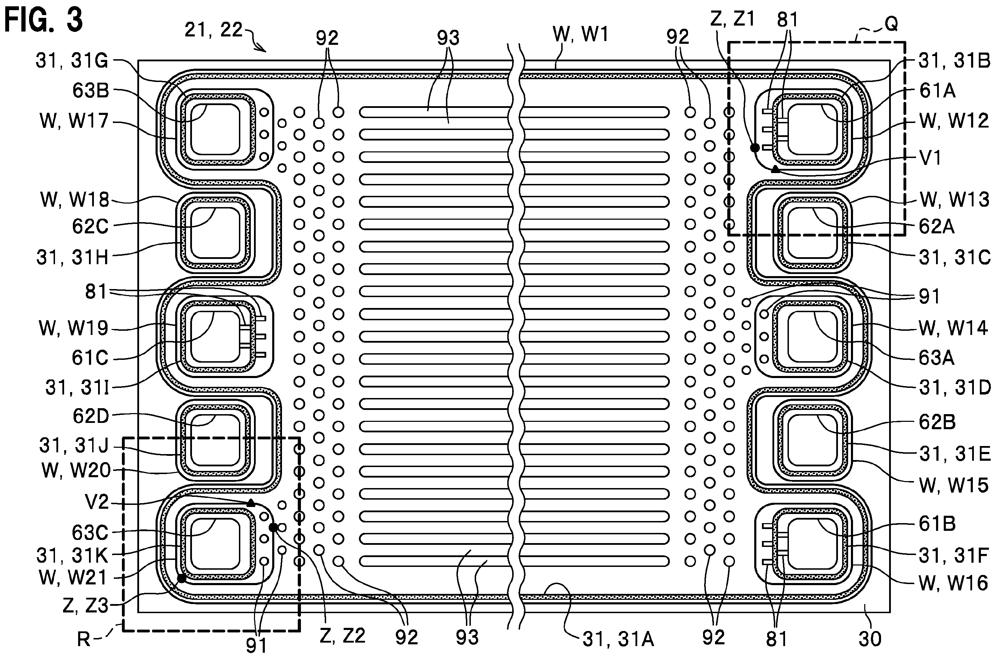

As shown in FIG. 3, multiple communication holes are formed on both sides, in a width direction, of each of the first metal separator 21 and the second metal separator 22. In the present embodiment, a fuel gas communication hole 61A, a cooling medium communication hole 62A, an oxidizer gas communication hole 63A, a cooling medium communication hole 62B, and a fuel gas communication hole 61B are formed in this order in an end portion on one side of each of the first metal separator 21 and the second metal separator 22.

Moreover, an oxidizer gas communication hole 63B, a cooling medium communication hole 62C, a fuel gas communication hole 61C, a cooling medium communication hole 62D, and an oxidizer gas communication hole 63C are formed in this order in an end portion on the other side of each of the first metal separator 21 and the second metal separator 22. The shape of each communication hole is formed of linear portions and curved portions, and has a substantially rectangular shape.

Moreover, multiple reaction gas flow passages 93 through which a reaction gas flows are formed in the first metal separator 21 and the second metal separator 22 along a longitudinal direction. An entrance buffer 92 and an exit buffer 92 formed of multiple embossed portions are formed on both sides of the reaction gas flow passages 93.

As shown in FIG. 3, the bead portions 31 are formed at multiple locations in each of the first metal separator 21 and the second metal separator 22. The bead portions 31 are distinguished according to parts by being denoted by reference signs such as bead portion 31A, bead portion 31B, bead portion 31C, ..., and bead portion 31K. The bead portion 31A is provided to extend over the entire circumference of an outer peripheral edge of each of the first metal separator 21 and the second metal separator 22, and is formed to pass between the communication holes in zigzag to be in an endless state.

Moreover, as shown in FIG. 3, the bead portion 31B is formed over the entire circumference of an outer peripheral edge of the fuel gas communication hole 61A to be in an endless state. The bead portion 31C is formed over the entire circumference of an outer peripheral edge of the cooling medium communication hole 62A to be in an endless state. The bead portion 31D is formed over the entire circumference of an outer peripheral edge of the oxidizer gas communication hole 63A to be in an endless state. The bead portion 31E is formed over the entire circumference of an outer peripheral edge of the cooling medium communication hole 62B to be in an endless state. The bead portion 31F is formed over the entire circumference of an outer peripheral edge of the fuel gas communication hole 61B to be in an endless state. A plan shape of each of these bead portions is formed to be slightly larger than the corresponding communication hole to extend along the corresponding communication hole.

Similarly, the bead portions 31G, 31H, 31I, 31J, and 31K are formed over the entire circumferences of outer peripheral edges of the oxidizer gas communication hole 63B, the cooling medium communication hole 62C, the fuel gas communication hole 61C, the cooling medium communication hole 62D, and the oxidizer gas communication hole 63C, respectively, to be in endless states. A plan shape of each of these bead portions is formed to be slightly larger than the corresponding communication hole to extend along the corresponding communication hole.

The overlaying step is a step of overlaying the first metal separator 21 and the second metal separator 22 together. In the overlaying step, surfaces of the first metal separator 21 and the second metal separator 22 on the opposite sides to surfaces where the bead portions 31 protrude are made to face each other, and the flat portions 30, 30 are overlaid one on top of the other.

The welding step is a step of joining the first metal separator 21 and the second metal separator 22 by welding along welding paths set in advance. In the welding step, a welding device (welding torch) is made to run from above the flat portion 30 to weld the overlaid flat portions 30, 30. Welded portions (welding bead) W is formed along movement trajectories of the welding device. The welded portions W are intermittently or continuously formed the inner side and/or the outer side of each bead portion 31 to extend along the bead portion 31. Portions where the welded portions W intersect each other or portions where a start end and a terminal end of the welded portion W overlap each other are weld meeting points Z. The weld meeting points Z include cases where the welded portions W intersect or overlap each other on the front and back sides of the first separator 3 (or the second separator 4). When the welding step is completed, the sealing member 51 is installed on the distal end surface of each bead portion 31, and the first separator 3 (second separator 4) is thereby completed.

The welding step is described in further detail. The welded portions W are distinguished according to parts by being denoted by reference signs such as welded portion W1, welded portion W2, welded portion W3, and so on.

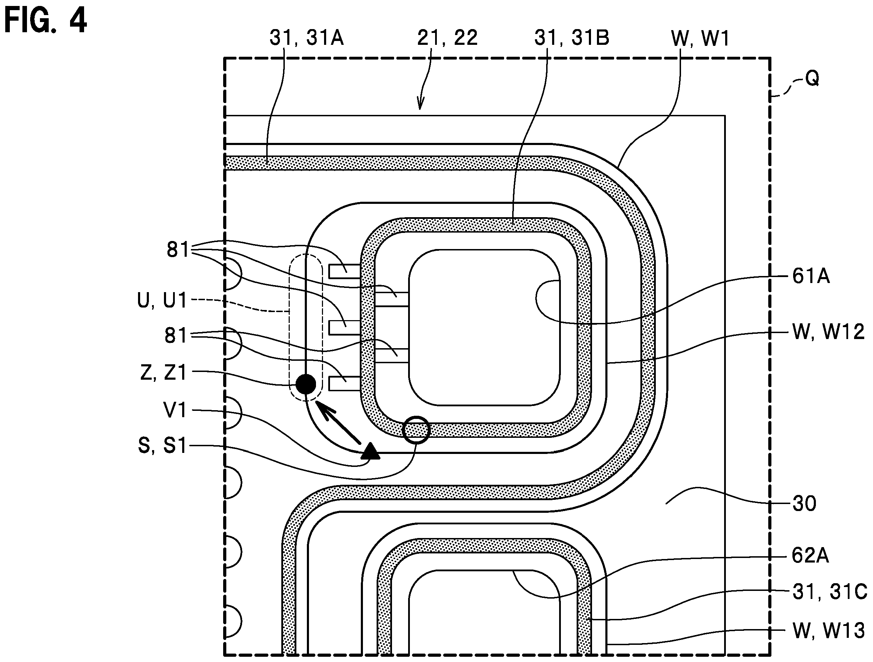

FIG. 4 is an enlarged plan view of a Q portion (portion around the fuel gas communication hole 61A) in FIG. 3. The welded portion W1 with an endless shape is formed outside the bead portion 31A, along the bead portion 31A. Moreover, a welded portion W12 with an endless shape is formed along the outer peripheral edge of the fuel gas communication hole 61A (inside the bead portion 31A). Multiple ribs 81 are formed in the bead portion 31B.

The ribs 81 are each formed orthogonal to the bead portion 31B. The ribs 81 are formed to protrude from the flat portion 30 like the bead portion 31B. The height dimension of the ribs 81 is the same as that of the bead portion 31B or is smaller than that of the bead portion 31B. The ribs 81 are provided as flow passages that allow the reaction gas and the cooling medium to flow. A weld meeting point Z1 is formed on the welded portion W12, near the ribs 81. Moreover, a welded portion W13 with an endless shape is formed outside the bead portion 31C, along the bead portion 31C.

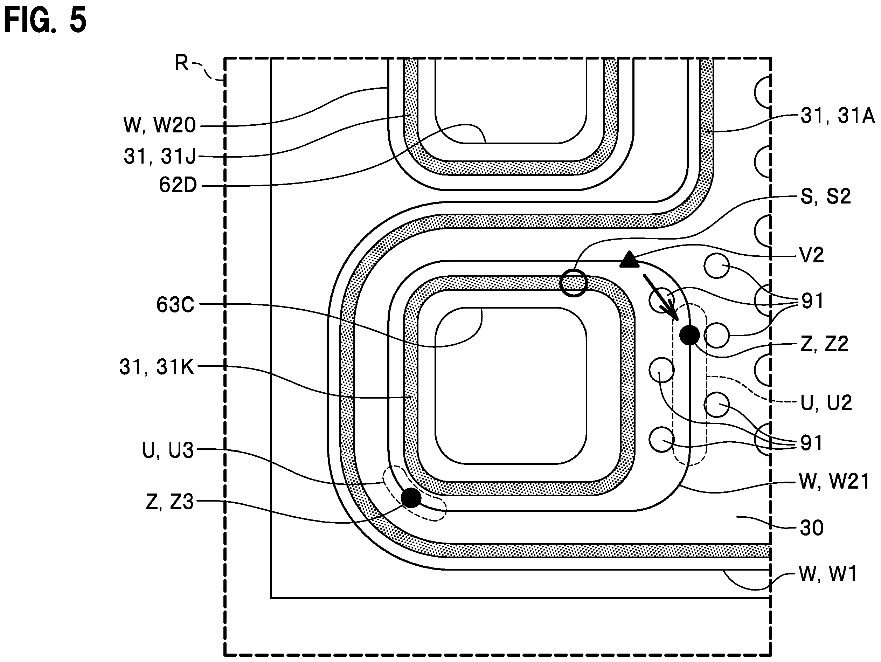

FIG. 5 is an enlarged plan view of an R portion (portion around the oxidizer gas communication hole 63C) in FIG. 3. A welded portion W21 with an endless shape is formed outside the bead portion 31K, along the bead portion 31K. Multiple embossed portions 91 are formed on both sides of the welded portion W21. The embossed portions 91 are portions protruding from the flat portion 30. The embossed portions 91 are provided to diffuse the reaction gas. A weld meeting point Z2 is formed on the welded portion W21, near the embossed portions 91. Moreover, a weld meeting point Z3 is formed on the welded portion W21, near a curved portion of the bead portion 31K.

Moreover, the welded portion W1 with the endless shape is formed outside the bead portion 31A, along the bead portion 31A. Furthermore, a welded portion W20 with an endless shape is formed outside the bead portion 31J, along the bead portion 31J.

Next, operations and effects of the present example are described. Each bead portion 31 has a complex shape including the linear portion having a linear shape and the curved portion having a curved shape, in the first metal separator 21 and the second metal separator 22. Accordingly, the bead portion 31 has a portion with a high stiffness and a portion with a low stiffness.

For example, in FIGs. 4 and 5, circles shown by bold solid lines show portions to be low-linear pressure portions S (low-linear pressure portions S1 and S2). The low-linear pressure portions S are each a portion in which linear pressure is lower than linear pressure required for sealing (desired bead reaction force of the bead portion 31). The bead reaction force of the bead portion 31 decreases when the bead height is reduced or when the stiffness of the bead portion 31 is low.

Meanwhile, when the welding is performed in the welding step, the weld meeting points Z where the welded portions W meet are formed. Since excessive heat is inputted in each weld meeting point Z in the welding, force pulling the adjacent bead portion 31 in a planar direction is generated, and there is a risk that the height of the bead portion 31 is reduced and the sealing property is also reduced. For example, as shown in FIGs. 3 to 5, the weld meeting points Z are formed in three locations in the present example (weld meeting points Z1 to Z3). Since the start end and the terminal end of the welded portion (welding bead) W need to overlap each other and the welded portions W need to intersect one another in the welding step, the weld meeting points Z are inevitably formed. However, when the position where the welded portions W meet is near the low-linear pressure portion S, the linear pressure of the low-linear pressure portion S is further reduced. Accordingly, it is preferable to form the weld meeting point Z at an area away from the low-linear pressure portion S if this is possible in terms of the welding step. According to the present invention, the weld meeting point Z is formed at an area to be a high-stiffness part U if this is possible in terms of the welding step.

For example, in FIG. 4, a black triangle sign denoted by reference sign V1 shows "prior weld meeting point". The prior weld meeting point V1 is shown at a position close to the low-linear pressure portion S1. Accordingly, if the prior weld meeting point V1 is located at this position without being changed, there is a risk that the linear pressure of the bead portion 31B near the prior weld meeting point V1 is further reduced.

Meanwhile, a portion shown by a dotted line circle in FIG. 4 is an area to be a high-stiffness part U1 with a high stiffness. Since the multiple ribs 81 are formed near the high-stiffness part U1, the stiffness is higher than that in the prior weld meeting point V1 on the welding path. Accordingly, in the present example, the weld meeting point Z1 is formed at the area to be the high-stiffness part U1, instead of the area of the prior weld meeting point V1.

Moreover, since the area shown by the high-stiffness part U1 is away from the bead portion 31B (a distance from the bead portion 31B to the weld meeting point Z1 is larger than a distance from the bead portion 31B to the prior weld meeting point V1), the effect of thermal contraction on the bead portion 31B in the welding of the weld meeting point Z1 can be reduced at this area. Specifically, since the area of the high-stiffness part U1 in the present example is an area with a high stiffness on the welding path and is sufficiently away from the bead portion 31B, it is possible to prevent the reduction of the bead height of the bead portion 31B and prevent the reduction of the sealing property.

Note that "the weld meeting point is formed at an area away from the bead portion" means an area where the effect of the thermal contraction on the nearby bead portion is sufficiently small or an area where the effect of the thermal contraction is eliminated when the welding is performed on the weld meeting point.

Moreover, in FIG. 5, a prior weld meeting point V2 is shown at a position near the low-linear pressure portion S2. Accordingly, if the prior weld meeting point V2 is located at this position without being changed, there is a risk that the linear pressure of the bead portion 31K near the prior weld meeting point V2 is further reduced.

Meanwhile, a portion shown by a dotted line circle in FIG. 5 is an area to be a high-stiffness part U2 with a high stiffness. Since the multiple embossed portions 91 are formed near the high-stiffness part U2, the stiffness is higher than that in the prior weld meeting point V2 on the welding path. Accordingly, in the present example, the weld meeting point Z2 is formed at the area to be the high-stiffness part U2, instead of the position of the prior weld meeting point V2. Specifically, since the area of the high-stiffness part U2 is an area with a high stiffness on the welding path, it is possible to prevent the reduction of the bead height of the bead portion 31A and prevent the reduction of the sealing property.

Moreover, since the area shown by the high-stiffness part U2 is away from the bead portion 31K (a distance from the bead portion 31K to the weld meeting point Z2 is larger than a distance from the bead portion 31K to the prior weld meeting point V2), the effect of thermal contraction on the bead portion 31K in the welding of the weld meeting point Z2 can be reduced at this area. Specifically, since the area of the high-stiffness part U2 is an area with a high stiffness on the welding path and is sufficiently away from the bead portion 31K, it is possible to prevent the reduction of the bead height of the bead portion 31K and prevent the reduction of the sealing property.

Moreover, as shown in FIG. 5, the weld meeting point Z3 is formed in a high-stiffness part U3. Since the high-stiffness part U3 is at an area near the curved portion of the bead portion 31K on the welding path, the high-stiffness part U3 has a high stiffness. This can prevent the reduction of the height of the bead portion 31K, and the reduction of the sealing property can be thus prevented. Note that the curved portion of each bead portion 31 generally has higher stiffness than the linear portion. Moreover, the curved portion of each bead portion 31 includes, for example, a portion in which the shape of the bead portion 31 is a wave shape in a plan view.

Although the example has been described above, design changes can be made as appropriate. For example, in the above example, the weld meeting point Z is at the area that is at the high-stiffness part U and that is sufficiently away from the bead portion 31. However, the weld meeting point Z may be formed at an area at the high-stiffness part U within a range where this is possible in terms of the welding step. Moreover, although the case where the ribs communicate with the bead portion 31 is given as an example in the present example, the weld meeting point Z may be set near the ribs in the case where the ribs and the bead portion 31 do not communicate with each other.

Moreover, although the portion near the curved portion of the bead portion 31, the portion near the ribs, and the portion near the embossed portions and on the welding path are given as examples of the high-stiffness part U in the present example, equivalently, an area that has a higher stiffness than a certain area on the welding path may be set as the high-stiffness part U.

### Reference Signs List

- 1: fuel cell
- 2: membrane electrode assembly
- 3: first separator (separator)
- 4: second separator (separator)
- 11: electrolyte membrane (film)
- 21: first metal separator
- 22: second metal separator
- 81: ribs
- 91: embossed portions
- S: low-linear pressure portion
- U: high-stiffness part
- W: welded portion
- Z: weld meeting point

## Claims

1. A manufacturing method of a fuel cell separator, comprising:
an overlaying step of overlaying a first metal separator (3) and a second metal separator (4) together, the first metal separator (3) and the second metal separator (4) each including a flat portion (30) and a bead portion (31) protruding from the flat portion (30); and
a welding step of welding, along the bead portion (31), overlaid flat portions (30) to form welded portions (W), wherein
in the welding step, a weld meeting point (Z) where the welded portions (W) meet is formed,
**characterized in that**
the weld meeting point (Z) is formed on a welding path at an area which is to be a high stiffness part (U) with a high stiffness, the high stiffness part (U) being formed
at a position along a curved portion of the bead portion (31) of each of the first metal separator (3) and the second metal separator (4), the bead portion (31) including a linear portion with a linear shape and the curved portion with a curved shape,
at a position along a rib (81) coupled to the bead portion (31) of each of the first metal separator (3) and the second metal separator (4), or
at a position along an embossed portion (91) provided in each of the first metal separator (3) and the second metal separator (4).

2. A fuel cell separator comprising a first metal separator (3) and a second metal separator (4) each including a flat portion (30) and a bead portion (31) protruding from the flat portion (30), wherein
the first metal separator (3) and a second metal separator (4) are joined together by welded portions (W) formed by using welding at overlaid flat portions (30), and
the fuel cell separator has a weld meeting point (Z) where the welded portions (W) meet,
**characterized in that**
the weld meeting point (Z) is formed on a welding path at an area which is to be a high stiffness part (U) with a high stiffness, the high stiffness part (U) being formed
at a position along a curved portion of the bead portion (31) of each of the first metal separator (3) and the second metal separator (4), the bead portion (31) including a linear portion with a linear shape and the curved portion with a curved shape,
at a position along a rib (81) coupled to the bead portion (31) of each of the first metal separator (3) and the second metal separator (4), or
at a position along an embossed portion (91) provided in each of the first metal separator (3) and the second metal separator (4).

## Patentansprüche

1. Verfahren zur Herstellung eines Brennstoffzellenseparators, umfassend:
einen Überlagerungsschritt, bei dem ein erster Metallseparator (3) und ein zweiter Metallseparator (4) miteinander überlagert werden, wobei der erste Metallseparator (3) und der zweite Metallseparator (4) jeweils einen flachen Abschnitt (30) und einen Wulstabschnitt (31), der von dem flachen Abschnitt (30) vorsteht, aufweisen; und
einen Schweißschritt, bei dem entlang des Wulstabschnitts (31) überlagernde flache Abschnitte (30) verschweißt werden, um verschweißte Abschnitte (W) zu bilden, wobei
bei dem Schweißschritt ein Schweißberührungspunkt (Z) gebildet wird, an dem die verschweißten Teile (W) sich berühren,
**dadurch gekennzeichnet, dass**
der Schweißberührungspunkt (Z) auf einem Schweißpfad in einem Bereich gebildet ist, der ein Hochsteifigkeitsteil (U) mit hoher Steifigkeit sein soll, wobei das Hochsteifigkeitsteil (U) gebildet wird
an einer Position entlang eines gekrümmten Abschnitts des Wulstabschnitts (31) sowohl des ersten Metallseparators (3) als auch des zweiten Metallseparators (4), wobei der Wulstabschnitt (31) einen linearen Abschnitt mit einer linearen Form und den gekrümmten Abschnitt mit einer gekrümmten Form aufweist,
an einer Position entlang einer Rippe (81), die mit dem Wulstabschnitt (31) sowohl des ersten Metallseparators (3) als auch des zweiten Metallseparators (4) gekoppelt ist, oder
an einer Position entlang eines erhabenen Abschnitts (91), der sowohl in dem ersten Metallseparator (3) als auch in dem zweiten Metallseparator (4) bereitgestellt ist.

2. Brennstoffzellenseparator, umfassend einen ersten Metallseparator (3) und einen zweiten Metallseparator (4), die jeweils einen flachen Abschnitt (30) und einen Wulstabschnitt (31), der von dem flachen Abschnitt (30) vorsteht, aufweisen, wobei
der erste Metallseparator (3) und ein zweiter Metallseparator (4) durch verschweißte Abschnitte (W) miteinander verbunden sind, die durch Schweißen an überlagernden flachen Abschnitten (30) gebildet sind, und
der Brennstoffzellenseparator einen Schweißberührungspunkt (Z) hat, an dem die verschweißten Teile (W) sich berühren,
**dadurch gekennzeichnet, dass**
der Schweißberührungspunkt (Z) auf einem Schweißpfad in einem Bereich gebildet ist, der ein Hochsteifigkeitsteil (U) mit hoher Steifigkeit sein soll, wobei das Hochsteifigkeitsteil (U) gebildet wird
an einer Position entlang eines gekrümmten Abschnitts des Wulstabschnitts (31) sowohl des ersten Metallseparators (3) als auch des zweiten Metallseparators (4), wobei der Wulstabschnitt (31) einen linearen Abschnitt mit einer linearen Form und den gekrümmten Abschnitt mit einer gekrümmten Form aufweist,
an einer Position entlang einer Rippe (81), die mit dem Wulstabschnitt (31) sowohl des ersten Metallseparators (3) als auch des zweiten Metallseparators (4) gekoppelt ist, oder
an einer Position entlang eines erhabenen Abschnitts (91), der sowohl in dem ersten Metallseparator (3) als auch in dem zweiten Metallseparator (4) bereitgestellt ist.

## Revendications

1. Procédé de fabrication d'un séparateur de pile à combustible, comprenant :
une étape de superposition consistant à superposer ensemble un premier séparateur métallique (3) et un second séparateur métallique (4), le premier séparateur métallique (3) et le second séparateur métallique (4) comprenant chacun une partie plate (30) et une partie bourrelet (31) faisant saillie à partir de la partie plate (30) ; et
une étape de soudage consistant à souder, le long de la partie bourrelet (31), des parties plates superposées (30) pour former des parties soudées (W), dans laquelle
dans l'étape de soudage, un point de jonction de soudure (Z) où les parties soudées (W) se rejoignent est formé,
**caractérisé en ce que**
le point de jonction de soudure (Z) est formé sur un chemin de soudure dans une zone qui doit être une partie à haute rigidité (U) présentant une rigidité élevée, la partie à haute rigidité (U) étant formée
à une position le long d'une partie courbe de la partie bourrelet (31) de chacun du premier séparateur métallique (3) et du second séparateur métallique (4), la partie bourrelet (31) comprenant une partie linéaire de forme linéaire et la partie courbe de forme courbe,
à une position le long d'une nervure (81) couplée à la partie bourrelet (31) de chacun du premier séparateur métallique (3) et du second séparateur métallique (4), ou
à une position le long d'une partie gaufrée (91) prévue dans chacun du premier séparateur métallique (3) et du second séparateur métallique (4).

2. Séparateur de pile à combustible comprenant un premier séparateur métallique (3) et un second séparateur métallique (4), comprenant chacun une partie plate (30) et une partie bourrelet (31) faisant saillie à partir de la partie plate (30), dans lequel
le premier séparateur métallique (3) et un second séparateur métallique (4) sont assemblés par des parties soudées (W) formées par soudage au niveau de parties plates superposées (30), et
le séparateur de pile à combustible a un point de jonction de soudure (Z) où les parties soudées (W) se rejoignent,
**caractérisé en ce que**
le point de jonction de soudure (Z) est formé sur un chemin de soudure dans une zone qui doit être une partie à haute rigidité (U) présentant une rigidité élevée, la partie à haute rigidité (U) étant formée
à une position le long d'une partie courbe de la partie bourrelet (31) de chacun du premier séparateur métallique (3) et du second séparateur métallique (4), la partie bourrelet (31) comprenant une partie linéaire de forme linéaire et la partie courbe de forme courbe,
à une position le long d'une nervure (81) couplée à la partie bourrelet (31) de chacun du premier séparateur métallique (3) et du second séparateur métallique (4), ou
à une position le long d'une partie gaufrée (91) prévue dans chacun du premier séparateur métallique (3) et du second séparateur métallique (4).
